Europäisches Patentamt

European Patent Office

Office européen des brevets

(11) Publication number: **0 420 693 A2**

(12) # EUROPEAN PATENT APPLICATION

(21) Application number: **90310682.1**

(22) Date of filing: **28.09.90**

(51) Int. Cl.⁵: **G11B 5/596, G11B 21/08**

(30) Priority: **29.09.89 JP 252508/89**

(43) Date of publication of application:
**03.04.91 Bulletin 91/14**

(84) Designated Contracting States:
**DE FR GB**

(71) Applicant: **International Business Machines
Corporation
Old Orchard Road
Armonk, N.Y. 10504(US)**

(72) Inventor: **Kisaka, Masashi
5-11-17 Yokohdai, Isogo-ku
Yokohama-shi, Kanagawa-ken(JP)**
Inventor: **Mizuno, Takeshi
F305,1-20 Minami Kasugaoka
Ibariki-shi,Osaka-Fu(JP)**

(74) Representative: **Moss, Robert Douglas
IBM United Kingdom Limited Intellectual
Property Department Hursley Park
Winchester Hampshire SO21 2JN(GB)**

(54) **Disk data storage system with head positioning system.**

(57) A servo pattern comprises two sets of servo patterns, A and B, and C and D. The first servo pattern (A and B) is symmetric about the centreline 3 of the data track. The second servo pattern (C and D) is offset by a known amount from the centreline of the data track. In an initial calibration phase, information from both sets of servo patterns is used to measure the value of K, which is the coefficient of proportionality between the servo position error signal and the true displacement of the head from the data track centreline.

FIG. 6

EP 0 420 693 A2

## DISK DATA STORAGE SYSTEM WITH HEAD POSITIONING SYSTEM

### Field of Invention

The present invention relates to a disk data storage system, and more particularly to a head positioning system for use therein.

### Background of the Invention

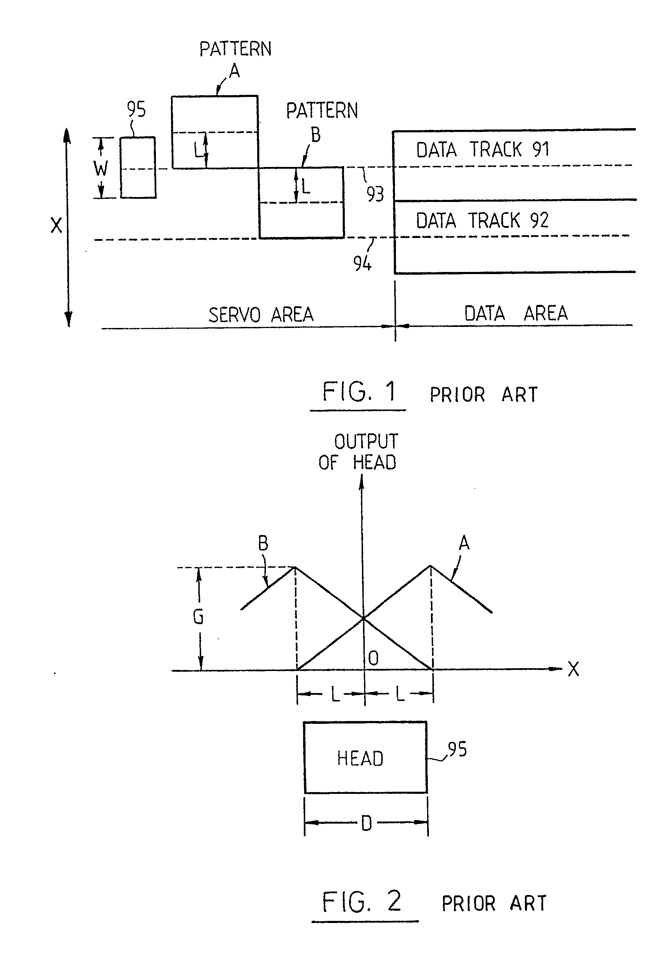

Digital or analog information is commonly stored on rotating disk media. Information is written on and read from concentric data tracks on the disks by electromagnetic transducing heads supported adjacent the disk surfaces. Servo information is also written on the disk surfaces, and is read to provide position error signals which control the movement of the heads. The servo information may be in the form of sectors interspersed around the disk with data information. Figures 1, 2 and 3 show a prior art system. Figure 1 shows the concentric data tracks 91 and 92 in a data area. Servo patterns A and B in a servo area which are the same width as the data track width are written on the upside and downside of a centre line 93 of the data track 91. The same patterns, not shown, as the patterns A and B are written upside and downside of a centre line 94 of the data track 92. When the centre of an electromagnetic transducing head 95 is positioned on the centre line 93, as shown in Figures 1 and 2, a signal represented by A-B remains zero. When the centre of the head 95 deviates from the centre line 93, the value of the signal A-B likewise deviates from the zero value. The signal is used to position the centre of head 95 on the centre line 93 of the data track 91. The above servo system is shown in IBM Technical Disclosure Bulletin, Vol. 18, No. 8, January 1976, pp.2656-2657.

The following signal Y is generated from the read out signals A and B.

$$Y = (A - B)/(A + B) \qquad (1)$$

The signals A and B are represented by:

$$A = (G/W)X + G[1-(L/W)] \qquad (2)$$
$$B = -(G/W)X + G[1-(L/W)] \qquad (3)$$

wherein: G --- Peak value of signals A and B
W --- Width of the head 95
L --- Distance between the centre of the servo pattern and the centre line of the data track
X --- Position error signal representing the deviation of the centre of the head from the centre line of the data track

From equations (1), (2) and (3)

$$Y = X/(W-L) \qquad (4)$$

Setting $K = 1/(W-L)$, equation (4) is represented by:

$$Y = KX \qquad (5)$$

where "K" represents the gradient of the linear equation (4).

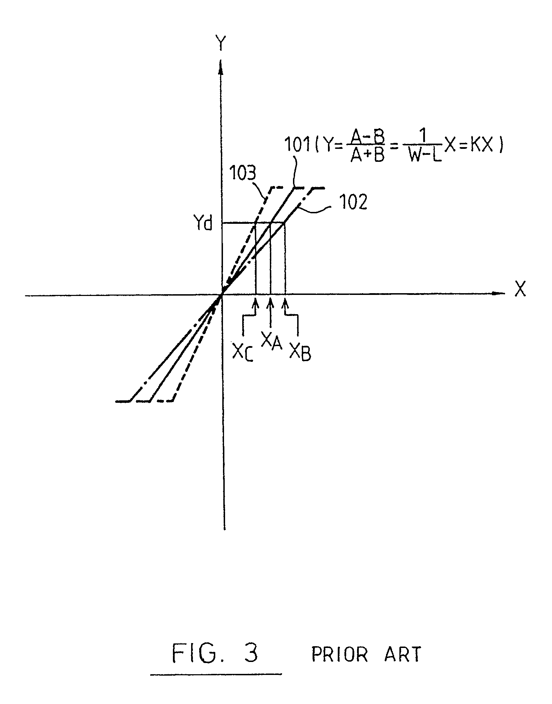

The "W" in $K = 1/(W-L)$ represents the width of the head 95. The width of the head 95 tends to vary due to its fabrication. The variation in individual head widths causes variation of the value of coefficient X, so that the linear line 101 for the nominal width of the head is varied to a linear line 102 or a linear 103, as shown in the Figure 3. In the track trace operations, the position X of the head 95 is determined based upon a detected value Yd.

In the case where the actual width of the head deviates from the nominal width and the signal Y for the actual width is represented by the linear line 103, the actual distance of the head from the centre of the data track for the detected value Yd must be Xc. However, the nominal linear line 101 has been used as the basis for deciding the position of the head in the prior art, and so the distance $X_A$ was used instead of Xc as the position error signal for the detected value Yd. It is apparent that the value $X_C$ differs from the value $X_A$, so that precise track tracing operations cannot be performed.

IBM Technical Disclosure Bulletin, Vol. 20, No. 1 June 1977, pp.349-350 describes one approach for solving the problem caused by the variation in width of individual servo heads. However, the servo patterns and calibration based upon the patterns disclosed therein differ considerably from those of the present invention.

An alternative solution using a 3-phase servo pattern is disclosed in EPB 097208, but differs from the present invention in using a gain control circuit to continuously alter the value of coefficient K.

### Disclosure of Invention

Accordingly, the invention provides a disk data storage system including: a data storage disk having concentric data tracks with first and second servo patterns recorded on opposite sides of a line representing the centre of a data track and third and fourth servo patterns recorded on opposite sides of a line separated from said line representing the centre of said data track; a transducing head which generates first, second, third and fourth detect signals on passing said first, second, third and fourth servo patterns respectively; and a head positioning system in which a position error signal

$X = Y/K$ is generated wherein Y is calculated from said first and second detect signals and K is a coefficient, said head positioning system including calculating means which receives said first, second, third and fourth detect signals to generate the value of said coefficient K; and wherein said calculating means generates the value of coefficient K during an initial calibration period, and said value of coefficient K is stored digitally and used thereafter to generate the position error signal X during read/write operations.

In other words a head positioning system for a disk data storage system is provided which generates a position error signal indicating the correct position of the centre of the deviated transducing head from the centre line of the data track, regardless of any variation in the head width.

In such a head positioning system, first and second servo patterns are recorded on one side and the other side, respectively, of a line representing the centre of each of the concentric data tracks or information storage tracks on the disk. Detect means including a transducing head can be moved in a direction transverse to the concentric data tracks. Each of the first and second servo patterns passing beneath the head generates first and second detect signals, and a position error signal $X = Y/K$ is generated wherein Y is calculated from the first and second detect signals and K is a coefficient. Third and fourth servo patterns are recorded on one side and the other side respectively of a line separated from the centre line of the data track. The detect means generates third and fourth detect signals for each of the third and fourth servo patterns passing beneath the head, and a calculating means is provided which receives the first, second, third and fourth detect signals to generate the value of the coefficient K. The calculating means generates the value of coefficient K during an initial calibration period, and this value of coefficient K is used to generate the position error signal X during susequent read/write operations on the disk.

Preferably the calculating means includes first means for generating signal $Y_1 = (A-B)/(A+B)$ and $Y_2 = (C-D)/(C+D)$, wherein A represents the peak value of the first detect signal, B represents the peak value of the second detect signal, C represents the peak value of the third detect signal, and D represents the peak value the fourth detect signal. In a first preferred embodiment the calculating means further includes second means for calculating the coefficient $K = Y_1/X_1$, wherein $X_1$ is a predetermined value, when $|Y_1|$ is equal to $|Y_2|$. In a second preferred embodiment, the calculating means further includes second means for receiving the value of $Y_2$ when the value of $Y_1$ is equal to zero, and calculating the coefficient $K = Y_2/X_2$,

wherein $X_2$ has a predetermined value. Typically a distance of 1/4 of the data track width for used as the predetermined value $X_1$ in the first embodiment and for the value $X_2$ in the second embodiment, although another known value of X can be used.

In the prior art precise track tracing operations have been difficult due to the variation of head width. The invention enables precise track tracing operations to be performed.

Brief Description of the Drawings:

Figure 1 shows servo patterns recorded on a prior art disk;
Figure 2 shows the output of the head against position for the servo pattern of Figure 1;
Figure 3 shows the true and assumed relationship between the position error signal and the positional displacement for the servo pattern of Figure 1;
Figure 4 shows the servo patterns recorded on the disk in accordance with a first embodiment of the present invention;
Figure 5 shows the relationship between the signal Y and the position of the head for the servo patterns of Figure 4;
Figure 6 shows a circuit block diagram for the first embodiment of the present invention;
Figure 7 shows a flow chart indicating operations in accordance with the first embodiment of the present invention;
Figure 8 shows servo patterns written on the disk in accordance with a second embodiment of the present invention;
Figure 9 shows the relationship between the signal Y and the position of the head for the servo patterns of Figure 8;
Figure 10 shows a circuit block diagram for the second embodiment of the present invention; and
Figure 11 shows a flow chart indicating operations in accordance with the second embodiment of the present invention.

Detailed Description

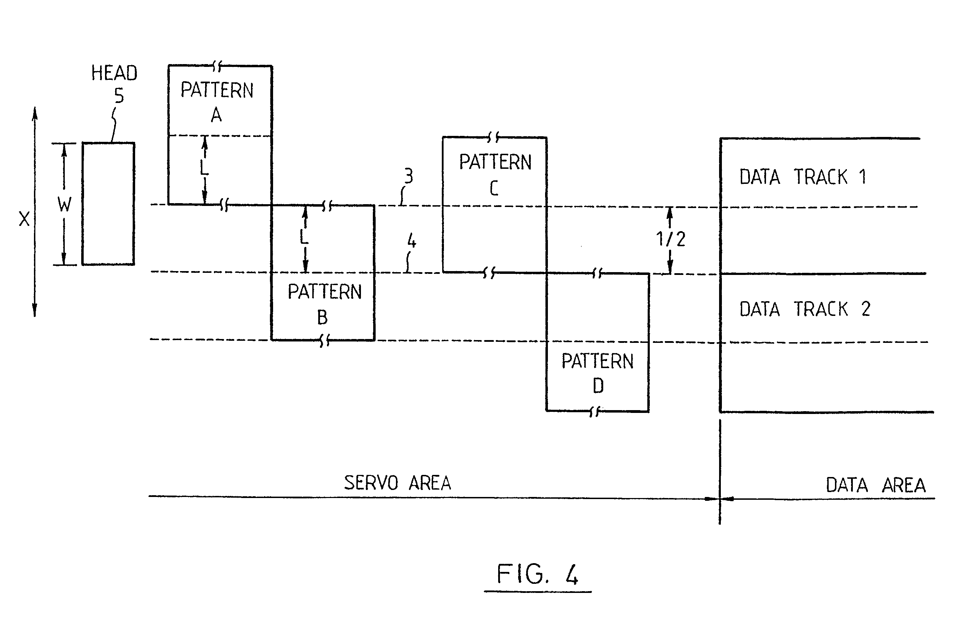

A first embodiment of the invention will now be described in detail with reference to Figures 4, 5 and 6. Figure 4 shows a portion of concentric data tracks in the data area and servo patterns in the servo area on a rotating disk media of a disk information storage apparatus. Two data tracks 1 and 2, and servo patterns A, B, C and D for the data track 1 are shown. The patterns A, B, C and D are burst magnetic patterns. The patterns A and B are recorded on opposite sides of a centre line 3 of the data track 1. The patterns C and D are recorded on opposite sides of a line 4. The distance between the centre line 3 and the line 4 is 1/2 of the data track width. The distance L between the centre of the servo patterns A and B and the centre line 3 is 1/2 of the width of data track. These two distances, i.e. 1/2 of the data track width and the value of L, are predetermined values used to write the servo patterns.

An electromagnetic transducing head 5 is moved by a head positioning mechanism, not shown, which moves the head 5 in the direction transversely of the concentric data tracks on the disk (ie parallel to direction X). The transducing head 5 generates read out signals for each of the patterns A, B, C and D as they pass beneath the head 5. The servo patterns on the disk define the radial position of the concentric data track.

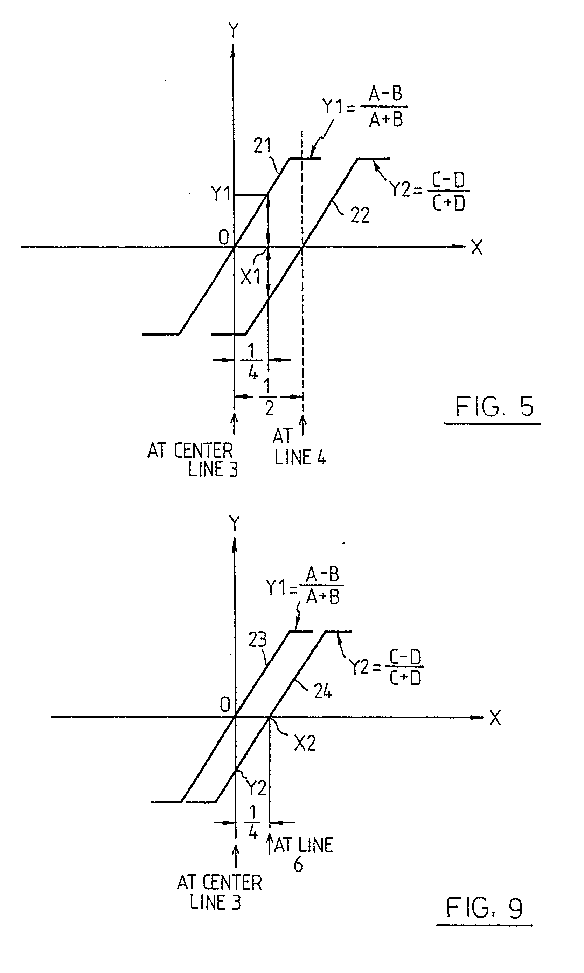

The width W of the electromagnetic transducing head 5 is about 70% of the data track width. Figure 5 shows a linear line 21 representing a signal $Y_1 = (A\text{-}B)/(A + B)$ generated by detecting the servo patterns A and B, and a linear line 22 representing signal $Y_2 = (C\text{-}D)/(C + D)$ generated by detecting the servo patterns C and D. The value $Y_1$ is zero when the centre of the head 5 is positioned at the centre line 3, and value $Y_2$ is zero when the centre of the head 5 is positioned at the line 4.

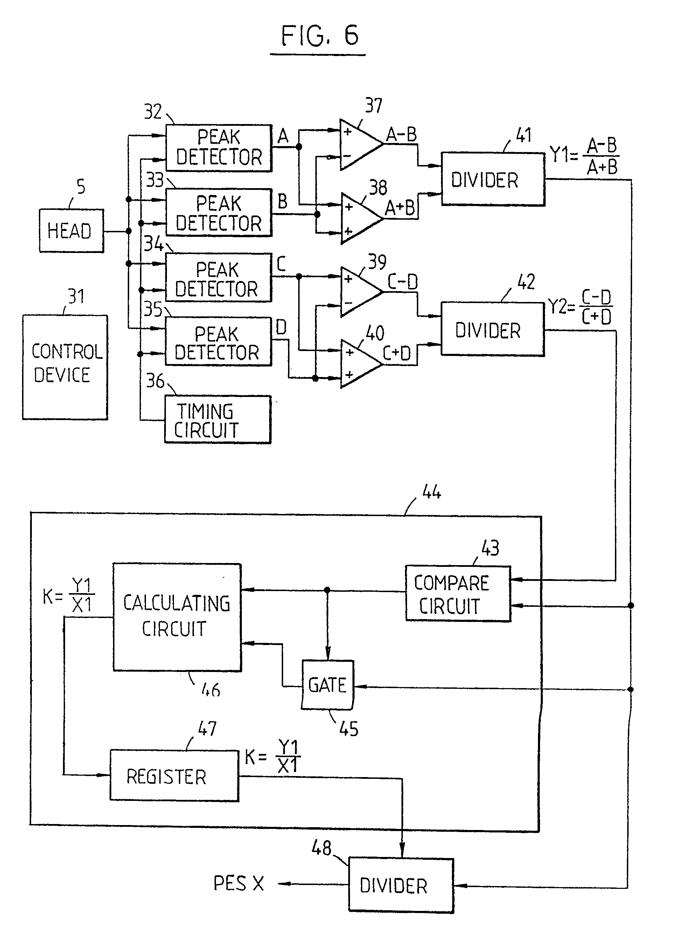

Figure 6 shows the circuit diagram of the first embodiment of the present invention. A control device 31, such as a microprocessor, controls the operations of the blocks in the Figure 6. Actually, a large number of control lines for controlling the operations of the blocks are connected between the control device 31 and the blocks. For simplifying the drawing, however, the control lines are not shown.

The control device 31 starts an initial calibration period in response to a power on by an operator. When the power is turned on, the disk media is rotated, the head 5 is slowly moved in the direction X, and the operations of the circuits shown in the Figure 6 are started. During the calibration period, the signals read out from all the servo patterns A, B, C and D are used. As the head 5 is moved relatively to the servo patterns A, B, C and D on the rotated disk media, the read out signals are supplied to peak detectors 32, 33, 34 and 35. A timing circuit 36 supplies gate pulses to the peak detectors in synchronism with the relative movement of the head 5 and the servo patterns A, B, C and D, so that the read out signal of the servo pattern A is gated to the peak detector 32, the read out signal of the servo pattern B is gated to the peak detector 33, the read out signal of the servo pattern C is gated to the peak detector 34, and the read out signal of the servo pattern D is gated to the peak detector 35. The peak detector 32, for example, receives the read out signal from the head 5, and generates a first detect signal A which represents the peak of the read out signal of the pattern A supplied from the head 5. The peak reflects the radial position of the head 5. In the same manner, the peak detectors 33, 34 and 35 generate a second detect signal B, a third detect signal C and a fourth detect signal D, respectively. The first, second, a third and a fourth detect signals are digital signals. The detect signals A and B are supplied to a subtractive circuit 37 which generates a signal A-B, and an adder 38 which generates a signal A + B. The detect signals C and D are supplied to a subtractive circuit 39 which generates a signal C-D, and an adder 40 which generates a signal C + D. The signals A-B and A + B are supplied to a divider 41 which generates the value $Y_1 = (A\text{-}B)/(A + B)$. The values C-D and C + D are supplied to a divider 42 which generates the value $Y_2 = (C\text{-}D)/(C + D)$. During the initial calibration period, both the signals $Y_1 = (A\text{-}B)/(A + B)$ and $Y_2 = -(C\text{-}D)/(C + D)$ are supplied to a compare circuit 43 in a calibration circuit 44, which determines whether the value $|Y_1|$ is equal to the value $|Y_2|$. Referring to Figure 5, the value $|Y_1|$ is equal to the value $|Y_2|$ when the centre of the head 5 is positioned 1/4 track width distant from the centre line 3. The position $X_1$ in the Figure 5 represents the position of the centre of the head 5 in the X axis (ie: the radial direction transversing the concentric data tracks).

Describing the theory of the first embodiment of the present invention, the equality of the values $|Y_1|$ and $|Y_2|$ indicates that the centre of the head 5 is positioned at the position $X_1$ which is separated from the centreline 3 by 1/4 of the data track width. In this embodiment, the head 5 is moved in the X direction to generate the result $|Y_1| = |Y_2|$. The value $Y_2$ when $|Y_1| = |Y_2|$ is used. Recalling equation (5) described above:

$$Y = KX \qquad (5)$$

$Y = Y_1$ and $X = X_1$ in the exemplary case, so that

$$Y_1 = KX_1 \qquad (6)$$

The $Y_1$ is the value gated from the divider 41 when the compare circuit 43 detects $|Y_1| = |Y_2|$, and the $X_1$ is a known or predetermined distance from the centre line 3 of the data track. Therefore, the coefficient K is calculated by

$$K = Y_1/X_1$$

The K is the coefficient which represents the gradient or inclination of the linear equation (5). This defines the coefficient K of the linear equation (6), allowing the position error signal representing the actual position of the centre of the head 5 on the X axis to then be calculated by $X = Y_1/K$ during the track tracing operations involving read/write operations of the rotating disk media.

The other method for generating the coefficient K is as follows:

The equations (4) and (5) described above are:

$$Y = X/(W-L) \quad (4)$$

$$Y = KX \quad (5)$$

Then, $K = 1/(W-L)$ (7)

The parameters in equation (4) when $|Y_1| = |Y_2|$ are:

$$Y = Y_1$$

$$X = X_1$$

L = 1/2 x Data track width

From this the values of W and of K are calculated.

Returning to the operations of the compare circuit 43 shown in Figure 6, the circuit 43 finds that the value $|Y_1|$ is equal to the value $|Y_2|$. It indicates that the distance between the centre of the head 5 and the centre line 3 in Figure 4 is 1/4 of the data track width. In response to $|Y_1| = |Y_2|$, the compare circuit 43 generates a gate signal, which is applied to a gate 45 and a calculating circuit 46 in the calibration circuit 44. In response to the gate signal, the gate 45 passes the signal $Y_1 = (A-B)/(A + B)$ to the calculating circuit 46. At this time, the values of the parameters. Y, X and L in the equation (4) are known, as stated above. That is, $Y = Y_1$, X = 1/4 of the data track width.

The calculating circuit 46 calculates the value $K = Y_1/X_1$. The value K is stored in a register 47 in the calibration circuit 44. The value K is used in the data track tracing operations.

In response to the calculation of the value K, the control device 31 terminates the calibration period and initiates the read/write operations of the rotating disk media.

It is noted that, during the track tracing operation during read/write of the disk media, only the signal $Y_1 = (A-B)/(A + B)$ generated from the servo patterns A and B is used, and the signal $Y_2 = (C-D)/(C + D)$ generated from the servo patterns C and D is not used. The signal $Y_1 = (A-B)/(A + B)$ is supplied to a divider 48. The divider 48 calculates the value X, which is the distance between the current position of the centre of the head 5 and the centre line 3 shown in Figure 4, by using the equation $Y_1 = KX$, and the known values $Y_1$ and K. The value K is supplied from the register 47 to the divider 48. The value X is a position error signal (PES), which represents the position error of the head from the centre line of the data track, and is supplied to a head positioning mechanism including a voice coil motor, not shown in the figures, and is used as a feedback signal for positioning the centre of the head 5 at the centre line 3 of the data track 1.

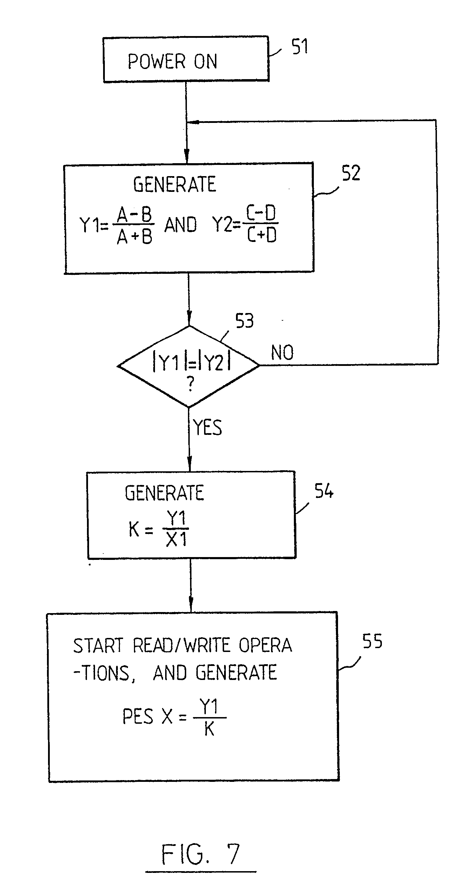

Although the operations in accordance with the present invention have been performed by the hardware circuits shown in Figure 6, the operations can be performed by the microprocessor. Figure 7 shows a flow chart of the operational steps performed by the microprocessor. The operations start at a block 51 wherein the power of the disk information storage system is turned on. The operations proceed to a block 52 wherein the microprocessor generates the values $Y_1 = (A-B)/(A + B)$ and $Y_2 = (C-D)/(C + D)$. The operations proceed to a block 53 wherein the microprocessor determines whether the value $|Y_1|$ is equal to the value $|Y_2|$, or not. If the answer of the block 53 is NO, the operations return to the block 52. If YES, the operations proceed to a block 54 wherein the microprocessor generates the value $K = Y_1/X_1$. The operations proceed to a block 56 wherein the microprocessor terminates the calibration operations, and starts the read/write operations of the rotating disk media, and generates the PES $X = Y_1/K$. The PES is supplied to the head positioning mechanism as the feedback signal, which is used to position the centre of the head 5 at the centre line 3 of the data track 1.

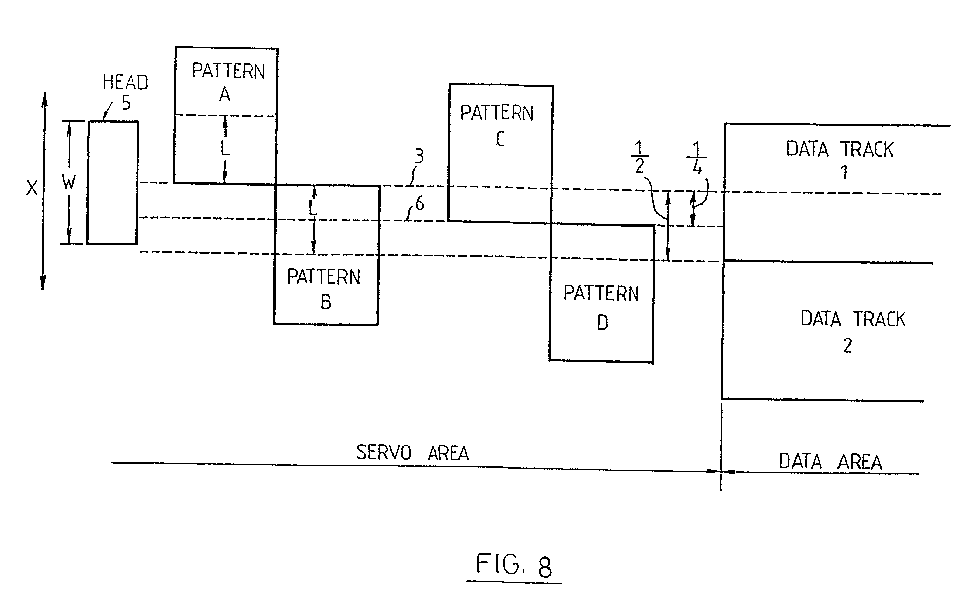

Next, a second embodiment of the present invention is described with reference to Figures 8, 9 and 10. In the second embodiment, the pattern C is recorded on the upside of a line 6 which is separated by 1/4 of the data track width from the centre line 3 of the data track 1, and the pattern D is recorded on the downside of the line 6, as shown in Figure 8. The method for generating the value K, which is the coefficient representing the slope of the linear line represented by $Y = KX$, differs from that of the first embodiment.

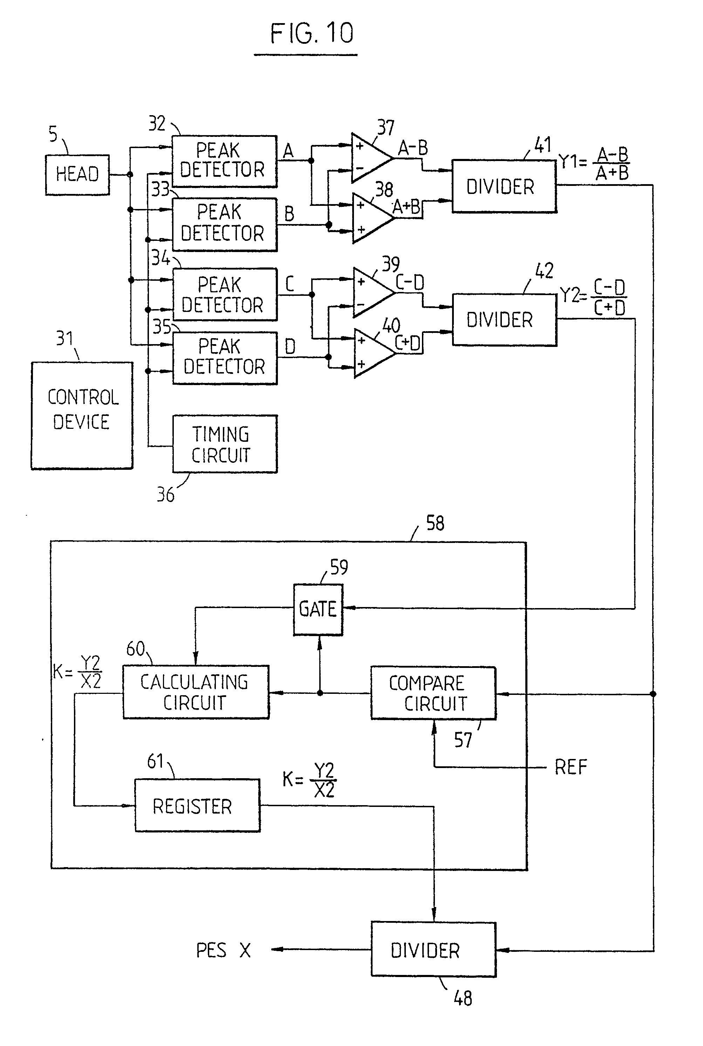

To generate the value K in the second embodiment, the head 5 is moved in the direction X to find the value $Y_1 = 0$. When the value $Y_1$ is equal to zero, it is known that the centre of the head 5 is positioned at the centre line 3, as shown in Figure 9. A value $Y_2$ is detected at this time. The linear line 24 crosses the X axis at $X_2 = 1/4$ of the data track width. Since both the values $X_2$ and $Y_2$ are known, the value K representing the slope of the linear line 24 can be determined. Since the line 23 is parallel to the line 24, as shown in Figure 9 , the same value K is used to generate the PES during the track tracing operations in the read/write operations of the rotating disk media.

Describing the operations of the second embodiment with reference to Figure 10, the circuit configuration of Figure 10 is the same as that of Figure 6 except for the calibration circuit 58. Therefore, the same reference numbers are assigned to equivalent blocks in Figure 6 and 10.

In the same manner as for the first embodiment, when the power is turned on, the control device 31 starts the initial calibration period, the disk media is rotated, the head 5 is slowly moved in the X direction, and the operations of the circuits in Figure 10 are started. During the calibration period, the signals read out from all the servo patterns A, B, C and D are used. As the head 5 is moved relative to the patterns A, B, C and D, the signals $Y_1 = (A-B)/(A+B)$ and $Y_2 = (C-D)/(C+D)$ are generated on the output lines of the dividers 41 and 42, respectively, in the same manner as described for the first embodiment. The signal $Y_1$ is supplied to a compare circuit 57 and the signal $Y_2$ is supplied to a gate 59. A reference value (REF) "zero" is applied to the other input of the comparator 57, which compares the value $Y_1$ with the value 0, and generates a gate signal when the value $Y_1$ is equal to zero. The gate signal is supplied to the gate 59 and a calculating circuit 60. In response to the gate signal, the gate 59 passes the signal $Y_2$ to the calculating circuit 60. At this time, the values $X_2$ and $Y_2$ are known. That is, the value $Y_2$ is the input value to the calculating circuit 60, and the value $X_2$ is equal to the 1/4 of the data track width. The calculating circuit 60 calculates the value $K = Y_2/H_2$, which is stored in a register 61. The value K is used during the data track tracing operations in the read/write operations of the rotating disk media.

In response to the calculation of the value K, the control device 31 terminates the calibration period and initiates the read/write operations of the rotating disk media. It is noted that, during the track tracing operations in the read/write operations of the disk media, only the signal $Y_1$ is used to generate the position error signal. The signal $Y_1$ is supplied to a divider 48. The value K calculated during the calibration period is supplied to the divider 48 from the register 61. The divider 48 calculates the value X, which represents a distance between the current position of the centre of the head 5 and the centre line 3 of the data track 1 shown in the Figure 8. The calculated value X, i.e. PES, is supplied to the head positioning mechanism as the feedback signal for positioning the centre of the head 5 at the centre line 3 of the data track 1.

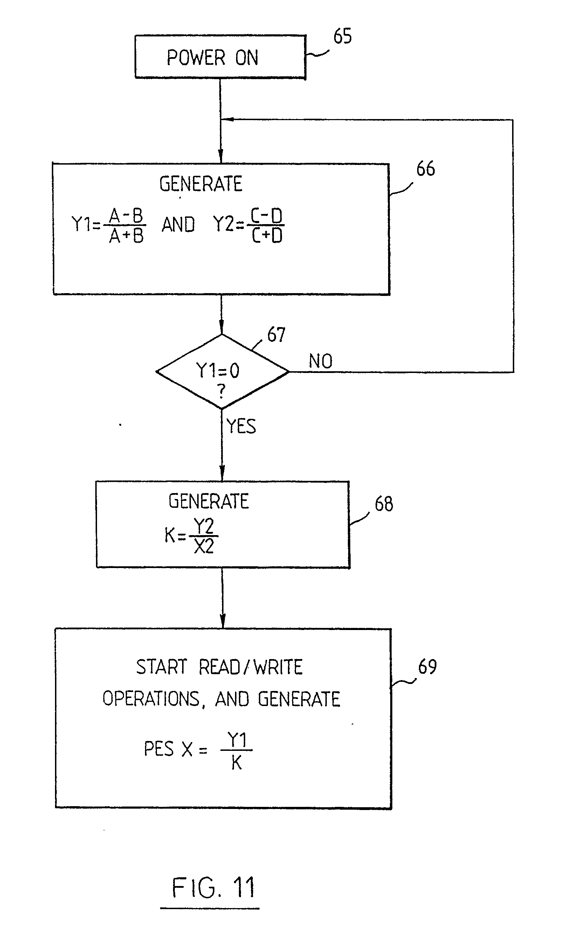

The operations of the second embodiment performed by the hardware circuits in the Figure 10 can be also performed by the microprocessor. Figure 11 shows a flow chart of the operational steps performed by the microprocessor. The operations start at block 65 where power to the disk information storage system is turned on. Operations proceed to a block 66, wherein the microprocessor generates the values $Y_1 = (A-B)/(A+B)$ and $Y_2 = (C-D)/(C+D)$, and then to block 67, wherein the microprocessor determines whether the value $Y_1$ is equal to zero, or not. If the answer of the block 67 is NO, operations return to block 66. If YES, operations then proceed to block 68 wherein the microprocessor generates the value $K = Y_2/X_2$. The operations proceed to block 69 wherein the microprocessor terminates the calibration operations, and starts the read/write operation of the rotating disk media, and generates the PES $H = Y_1/K$. The PES is supplied to the head positioning mechanism as the feedback signal which is used to position the centre of the head 5 at the centre line 3 of the data track 1 shown in the Figure 8.

## Claims

1. A disk data storage system including:
a data storage disk having concentric data tracks with first and second servo patterns recorded on opposite sides of a line (3) representing the centre of a data track and third and fourth servo patterns recorded on opposite sides of a line (4) separated from said line representing the centre of said data track;
a transducing head (5) which generates first, second, third and fourth detect signals on passing said first, second, third, and fourth servo patterns respectively; and
a head positioning system in which a position error signal $X = Y/K$ is generated wherein Y is calculated from said first and second detect signals and K is a coefficient, said head positioning system including calculating means which receives said first, second, third and fourth detect signals to generate the value of said coefficient K; and wherein said calculating means generates the value of coefficient K during an initial calibration period, and said value of coefficient K is stored digitally and used thereafter to generate the position error signal X during read/write operations.

2. A disk data storage system according to Claim 1, wherein said calculating means includes first means for generating signals $Y_1 = (A-B)/(A+B)$ and $Y_2 = (C-D)/(C+D)$ wherein A represents the peak value of said first detect signal, B represents the peak value of said second detect signal, C represents the peak value of said third detect signal and D represents the peak value of said fourth detect signal, and second means (43) for calculating the coefficient $K = Y_1/X_1$, wherein $X_1$ is a predetermined value, when $|Y_1|$ is equal to $|Y_2|$.

3. A disk data storage system according to Claim 1, wherein said calculating means includes first means for generating signals $Y_1 = (A-B)/(A+B)$ and $Y_2 = (C-D)/(C+D)$ wherein A represents the peak value of said first detect signal, B represents the peak value of said second detect signal, C represents the peak value of said third detect signal and D represents the peak value of said fourth detect signal, and second means (58) for receiving the value of signal $Y_2$ when the value $Y_1$ is equal to zero, and calculating said coefficient $K = Y_2/X_2$, wherein $X_2$ has a predetermined value.

PATTERN
A

95

PATTERN
B

W

L

L

DATA TRACK 91

93

DATA TRACK 92

94

X

SERVO AREA

DATA AREA

FIG. 1    PRIOR ART

OUTPUT
OF HEAD

B

A

G

O

X

L

L

HEAD

95

D

FIG. 2    PRIOR ART

7

$$101 \left( Y = \frac{A-B}{A+B} = \frac{1}{W-L} X = KX \right)$$

FIG. 3    PRIOR ART

HEAD
5

PATTERN
A

PATTERN
B

PATTERN
C

PATTERN
D

L

L

1/2

3

4

W

X

DATA TRACK 1

DATA TRACK 2

SERVO AREA

DATA AREA

FIG. 4

$$Y1 = \frac{A-B}{A+B}$$

$$Y2 = \frac{C-D}{C+D}$$

FIG. 5

AT CENTER LINE 3

AT LINE 4

$$Y1 = \frac{A-B}{A+B}$$

$$Y2 = \frac{C-D}{C+D}$$

AT CENTER LINE 3

AT LINE 6

FIG. 9

10

# FIG. 6

$$Y1 = \frac{A-B}{A+B}$$

$$Y2 = \frac{C-D}{C+D}$$

$$K = \frac{Y1}{X1}$$

$$K = \frac{Y1}{X1}$$

PES X

POWER ON — 51

GENERATE — 52

$$Y1 = \frac{A-B}{A+B} \quad \text{AND} \quad Y2 = \frac{C-D}{C+D}$$

53

$|Y1| = |Y2|$ ? — NO

YES

GENERATE — 54

$$K = \frac{Y1}{X1}$$

START READ/WRITE OPERA-TIONS, AND GENERATE — 55

$$PES \; X = \frac{Y1}{K}$$

FIG. 7

FIG. 8

EP 0 420 693 A2

# FIG. 10

POWER ON — 65

GENERATE — 66

$$Y1 = \frac{A-B}{A+B} \quad AND \quad Y2 = \frac{C-D}{C+D}$$

67

$Y1=0$ ? — NO

YES

GENERATE — 68

$$K = \frac{Y2}{X2}$$

START READ/WRITE — 69
OPERATIONS, AND GENERATE

$$PES \ X = \frac{Y1}{K}$$

FIG. 11